# EUROPEAN PATENT APPLICATION

(11) **EP 4 468 160 A1**
(43) Date of publication of application: **27.11.2024**
(21) Application number: 23762658.5
(22) Date of filing: 04.01.2023
(51) Int. Cl.: G06F 11/36

(54) **DYNAMIC MEASUREMENT METHOD AND APPARATUS FOR CODE SEGMENT, AND ELECTRONIC DEVICE**

(30) Priority: 01.03.2022 CN 202210197005
(71) Applicant: Huawei Technologies Co., Ltd., Shenzhen, Guangdong 518129 (CN)
(72) Inventor: LU, Huaxin, Shenzhen, Guangdong 518129 (CN); GUI, Yao, Shenzhen, Guangdong 518129 (CN)
(74) Representative: Gill Jennings & Every LLP
(86) International application number: PCT/CN2023/070259
(87) International publication number: WO 2023/165257

(57) **Abstract**

A dynamic code segment measurement method is provided, which relates to the field of computer technologies. The method includes: measuring a code segment in a memory of a user-mode process and/or a kernel, to obtain first measurement data; determining whether the first measurement data is consistent with target baseline data; when the first measurement data is consistent with the target baseline data, performing hash calculation on a memory area occupied by the target baseline data, to obtain a first digest value; determining whether the first digest value is capable of completing unseal; and if the first digest value is capable of completing unseal, determining that the code segment in the memory of the user-mode process and/or the kernel is not tampered with, and that the target baseline data is not tampered with; or if the first digest value is not capable of completing unseal, determining that the target baseline data is tampered with. This ensures integrity and accuracy of the baseline data during dynamic measurement.

## Description

This application claims priority to Chinese Patent Application No. 202210197005.2, filed with the China National Intellectual Property Administration on March 1, 2022 and entitled "DYNAMIC CODE SEGMENT MEASUREMENT METHOD AND APPARATUS AND ELECTRONIC DEVICE", which is incorporated herein by reference in its entirety.

### TECHNICAL FIELD

This application relates to the field of computer technologies, and in particular, to a dynamic code segment measurement method and apparatus and an electronic device.

### BACKGROUND

In recent years, with the continuous development of digital economy and information software industry, information systems face increasing security risks. As the basis of the information system, an operating system connects to different hardware platform interfaces downwards and provides an operating environment for applications upwards. Operating system security is also a cornerstone of security of the entire information system. The operating system needs to provide availability, integrity, and confidentiality assurance for key assets of the information system. The operating system runs a large quantity of software. Some software inevitably has vulnerabilities, such as configuration vulnerabilities, coding vulnerabilities, and authentication vulnerabilities. Once these vulnerabilities are exploited by attackers, system services may be severely affected, resulting in privacy data leakage, core secret theft, service unavailability, a serious business loss, or the like.

Most software attacks are accompanied by system integrity damage, such as malicious process running, configuration file tampering, and backdoor implantation. Therefore, an operating system integrity protection technology is proposed in the industry, which means that key data is measured and verified from the start of an operating system, to ensure that the key data is not tampered with, thereby ensuring that system running is predictable. Existing operating system integrity protection technologies in the industry include secure boot, measured boot, file integrity protection, and the like. The secure boot/measured boot means that integrity detection is performed on a key file of the operating system in a startup process of the operating system. The file integrity protection means that integrity protection is performed on a file when the operating system is running. However, these integrity protection technologies cannot protect memory data during process running.

### SUMMARY

This application provides a dynamic code segment measurement method and apparatus, an electronic device, a computer storage medium, and a computer program product, to protect memory data during process running.

According to a first aspect, this application provides a dynamic code segment measurement method. The method includes: measuring a code segment in a memory of a user-mode process and/or a kernel, to obtain first measurement data; determining whether the first measurement data is consistent with target baseline data; when the first measurement data is consistent with the target baseline data, performing hash calculation on a memory area occupied by the target baseline data, to obtain a first digest value; and determining whether the first digest value is capable of completing unseal; and if the first digest value is capable of completing unseal, determining that the code segment in the memory of the user-mode process and/or the kernel is not tampered with, and that the target baseline data is not tampered with; or if the first digest value is not capable of completing unseal, determining that the target baseline data is tampered with.

In this way, when dynamic measurement is performed on the code segment in the memory of the user-mode process and/or the kernel, the measurement data is compared with the target baseline data. When the two are consistent, a digest value of the memory area occupied by the target baseline data is calculated, and protection is performed by using a seal/unseal mechanism. This ensures integrity and accuracy of baseline data during dynamic measurement. For example, the user-mode process may be obtained from preset whitelist data. The whitelist data is mainly used to specify a process for which code segment measurement needs to be performed. For example, measuring the code segment in the memory of the user-mode process and/or the kernel may be understood as: measuring the code segment in the kernel, and/or measuring the code segment in the memory of the user-mode process; and that the code segment in the memory of the user-mode process and/or the kernel is not tampered with may be understood as: the code segment in the kernel is not tampered with, and/or the code segment in the memory of the user-mode process is not tampered with.

In a possible implementation, the method further includes: when the first measurement data is inconsistent with the target baseline data, and the first digest value is capable of completing unseal, determining that the code segment in the memory of the user-mode process and/or the kernel is tampered with, and that the target baseline data is not tampered with; or when the first measurement data is inconsistent with the target baseline data, and the first digest value is not capable of completing unseal, determining that the target baseline data is tampered with.

In a possible implementation, the method further includes: when the first measurement data is inconsistent with the target baseline data, generating a first measurement log; performing hash calculation on the first measurement log, to obtain a digest value of the first measurement log; and updating a reference extension value based on the reference extension value and the digest value of the first measurement log.

In a possible implementation, the method further includes: responding to an obtained first instruction, where the first instruction indicates to perform integrity check on the first measurement log; calculating a hash value for the first measurement log one by one, and performing extension calculation on the obtained hash value, to obtain a second extension value; determining whether the second extension value is consistent with the reference extension value; and if the second extension value is inconsistent with the reference extension value, determining that the first measurement log is tampered with; or if the second extension value is consistent with the reference extension value, determining that the first measurement log is not tampered with. In this way, integrity of the measurement log is ensured, and a risk that the measurement log is tampered with is avoided.

In a possible implementation, before the determining whether the first measurement data is consistent with the target baseline data, the method further includes: measuring the code segment in the memory of the user-mode process, to obtain the target baseline data; performing hash calculation on the memory area occupied by the target baseline data, to obtain a second digest value; and performing a seal operation based on the second digest value. In this way, an operation of sealing a key is implemented based on the second digest value, so that a subsequent unseal operation may be performed.

In a possible implementation, the method further includes: obtaining static baseline data of the user-mode process; and when the target baseline data is inconsistent with the static baseline data, determining that the code segment in the memory of the process is tampered with, and generating a second measurement log. For example, when the static baseline data is obtained, validity of the data may be verified, to avoid that the data is tampered with.

In a possible implementation, the obtaining static baseline data of the user-mode process specifically includes: obtaining an executable file corresponding to the user-mode process; obtaining header information of the executable file, and obtaining, based on the header information, a target segment that includes the code segment and that is in the executable file; obtaining, based on the header information and in the executable file, a target address list in which a relocation address occurs; and performing hash calculation on the segment that includes the code segment and that is in the executable file, and removing, in a calculation process, data corresponding to the relocation address in the target address list, to obtain static baseline data. Therefore, by identifying code data that may change in the user-mode process and skipping measurement, applicability of dynamic measurement technology is improved.

In a possible implementation, the measuring a code segment in a memory of a user-mode process specifically includes: obtaining a target segment that includes the code segment and that is in the memory of the user-mode process; obtaining, in the target segment, a target address list in which a relocation address occurs; and performing hash calculation on the target segment, and removing, in a calculation process, data corresponding to the address in the target address list, to obtain a measurement result (namely, measurement data). Therefore, by identifying code data that may change in the user-mode process and skipping measurement, applicability of dynamic measurement technology is improved.

In a possible implementation, the measuring a code segment of a kernel specifically includes: obtaining a first start and end address of code segment data in the kernel, and obtaining a second address of a changed code segment in the kernel; and performing hash calculation on code segment data within a range of the first start and end address, and removing, in a calculation process, data corresponding to the second address, to obtain a measurement result. Therefore, by identifying code data that may change in the kernel and skipping measurement, applicability of dynamic measurement technology is improved.

In a possible implementation, the measuring a code segment in a memory of a user-mode process specifically includes: obtaining M target segments that include code segments and that are in the memory of the user-mode process; determining, for any one target segment of the M target segments, x physical pages corresponding to the any one target segment; when there is a dirty page in the x physical pages, measuring the any one target segment; or when no dirty page exists in the x physical pages, performing hash calculation on page frame numbers of the x physical pages, to obtain a first hash value; determining whether data that is the same as the first hash value exists in a first data structure, where the first data structure is at least used to store a hash value of a page frame number of a target physical page, the target physical page is a physical page corresponding to a measured target segment, and the first data structure is created when measurement on the code segment in the memory of the user-mode process starts, and is destructed when measurement on the code segment in the memory of the user-mode process ends; and if the data exists, skipping measuring the any one target segment; or if the data does not exist, adding the first hash value to the first data structure, and measuring the any one target segment. That is, during measurement, for each user-mode process, a target segment in a memory of the user-mode process may be first obtained, and then for each obtained target segment, a physical page corresponding to the target segment is determined. When a dirty page exists in the physical page corresponding to the target segment, the target segment is measured. Otherwise, a hash value of a page frame number of the physical page corresponding to the target segment is calculated, and whether the hash value exists in the first data structure is determined. If the hash value does not exist, the target segment is measured, and the hash value obtained through calculation is recorded in the first data structure. If the hash value exists, the target segment is not measured. In this way, when memory measurement is performed on a plurality of user-mode processes, repeated measurement determining is first performed based on a physical page address, to avoid redundant measurement, so that time consumed by dynamic measurement can be greatly reduced.

According to a second aspect, this application provides a dynamic code segment measurement apparatus, including: at least one storage, configured to store a program; and at least one processor, configured to execute the program stored in the storage. When the program stored in the storage is executed, the processor is configured to perform the method provided in the first aspect.

According to a third aspect, this application provides an electronic device. The electronic device includes at least one storage configured to store a program and at least one processor configured to execute the program stored in the storage. When the program stored in the storage is executed, the processor is configured to perform the method provided in the first aspect. For example, the electronic device may be but is not limited to a server.

According to a fourth aspect, this application provides a computer-readable storage medium, where the computer-readable storage medium stores a computer program. When the computer program is run on an electronic device, the electronic device is enabled to perform the method provided in the first aspect.

According to a fifth aspect, this application provides a computer program product. When the computer program product runs on an electronic device, the electronic device is enabled to perform the method provided in the first aspect.

According to a sixth aspect, an embodiment of this application provides a dynamic code segment measurement apparatus, including at least one processor and an interface. The at least one processor obtains program instructions or data through the interface, and the at least one processor is configured to execute the program instructions, to implement the method provided in the first aspect.

It can be understood that, for beneficial effects of the second aspect to the sixth aspect, reference may be made to related descriptions in the first aspect. Details are not described herein again.

### BRIEF DESCRIPTION OF DRAWINGS

The following briefly describes accompanying drawings that need to be used in describing embodiments or a conventional technology.
FIG. 1 is a schematic diagram of a system architecture of a dynamic code segment measurement solution according to an embodiment of this application;
FIG. 2 is a schematic flowchart of a dynamic code segment measurement solution according to an embodiment of this application;
FIG. 3 is a schematic diagram of a construction phase procedure in a dynamic code segment measurement solution according to an embodiment of this application;
FIG. 4 is a schematic flowchart of generating static baseline data by using an ELF file according to an embodiment of this application;
FIG. 5 is a schematic flowchart of measuring a user-mode process code segment according to an embodiment of this application;
FIG. 6 is a schematic flowchart of measuring a kernel code segment according to an embodiment of this application;
FIG. 7A and FIG. 7B are schematic flowcharts of a measurement optimization method according to an embodiment of this application;
FIG. 8 is a schematic diagram of an integrity proof process according to an embodiment of this application;
FIG. 9 is a schematic diagram of an implementation process of a dynamic code segment measurement solution according to an embodiment of this application;
FIG. 10 is a schematic diagram of steps of a dynamic code segment measurement method according to an embodiment of this application; and
FIG. 11 is a schematic diagram of a structure of a dynamic code segment measurement apparatus according to an embodiment of this application.

### DESCRIPTION OF EMBODIMENTS

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this specification, the terms "first", "second", and so on are intended to distinguish between different objects, but do not indicate a particular order of the objects. For example, a first response message, a second response message, and the like are used to distinguish between different response messages, but are not used to describe a particular order of the response messages.

In embodiments of this application, the word such as "example" or "for example" represents giving an example, an illustration, or a description. Any embodiment or design solution described as "example" or "for example" in embodiments of this application should not be explained as being more preferred or advantageous than another embodiment or design solution. To be precise, the terms such as "example" or "for example" are intended to present a related concept in a specific manner.

In the descriptions of embodiments of this application, unless otherwise specified, "a plurality of" means two or more. For example, a plurality of processing units means two or more processing units, and a plurality of elements means two or more elements.

Before embodiments of this application are described in detail, related terms in embodiments of this application are first explained.

### (1) Code segment

The code segment is an application program file (for example, an executable file of an application program) or a part that stores a code instruction in a kernel. When the application program is executed, the part may be mapped to a memory for execution.

### (2) Dynamic measurement

The dynamic measurement means dynamically obtaining program features when a system is running, and using a specific method to calculate the features to obtain a comparable value. The value can be compared with a reference value to determine whether the system is tampered with.

### (3) Seal/unseal (seal/unseal)

Seal/unseal: After a trusted platform module (trusted platform module, TPM) generates a key, the key can be further encrypted based on additional data (such as a platform status register). This step is called seal (seal). The key can be normally unsealed (unseal) only when additional data is the same as that of the seal (seal).

### (4) Static baseline data

The static baseline data is baseline data obtained by extracting code segments from binary files of an application and calculating abstracts when the binary files of the application are released.

### (5) Dynamic baseline data

The dynamic baseline data is reference value data obtained by extracting a code segment in a memory of an application running in a current system at a specific time, and calculating abstracts.

### (6) Relocation

The relocation is a process of converting logical address space of a program into actual physical address space in a memory.

The following describes technical solutions in embodiments of this application.

Usually, if an attacker uses some means to modify a code instruction of a process, the process may be hijacked or implanted with a backdoor, which has a severe impact and high concealment. For this attack means, a dynamic code segment integrity technology may be used. That is, integrity protection is performed on code instruction data in a memory of a process during running. However, an existing code segment integrity protection technology has the following weaknesses:
(1) There is no reliable reference value for measured memory data. For an existing measurement model, reference data is usually determined during running, and correctness of the reference value cannot be ensured. In addition, if an attacker tampers with the reference value in the memory at the same time, a measurement comparison result may be inaccurate.
(2) During process measurement, a data hash value in a code segment of a memory of a process needs to be calculated. When a large quantity of processes need to be measured, measurement duration increases, which greatly affects user service processes. In addition, a short measurement interval cannot be configured, which prolongs a measurement time window and reduces security.
(3) An operating system has many code segment self-modification scenarios, such as a static key mechanism of a Linux kernel and process relocation during loading. Conventional integrity protection technologies cannot perform measurement in these scenarios.

Based on the foregoing problem, embodiments of this application provide a dynamic code segment measurement solution based on a Linux operating system. In this solution, code segments of a user-mode process, a kernel module, and a kernel in a memory are measured, and are compared with a reference value, to actively detect whether a code segment is tampered with and attacked. In technical implementation, the preceding three weaknesses are addressed. Specifically, the following three aspects may be included:

First, baseline data of measurement is determined during process file construction and needs to be verified by signature. In addition, a baseline data monitoring module is introduced to the measurement. When a kernel processes the baseline data, the data is stored in a specified memory area. Then the baseline data monitoring module calculates a digest value of the memory area and protects the digest value by using the seal/unseal mechanism of a TPM chip to ensure integrity and accuracy of the dynamic measurement baseline data.

Second, when memory measurement is performed on a plurality of user-mode processes, repeated measurement determining is first performed based on a physical page address, to avoid redundant measurement, so that time consumed by dynamic measurement can be greatly reduced.

Third, by identifying code data that may change in a user-mode process and a kernel code segment, and skipping measurement, applicability of dynamic measurement technology is improved.

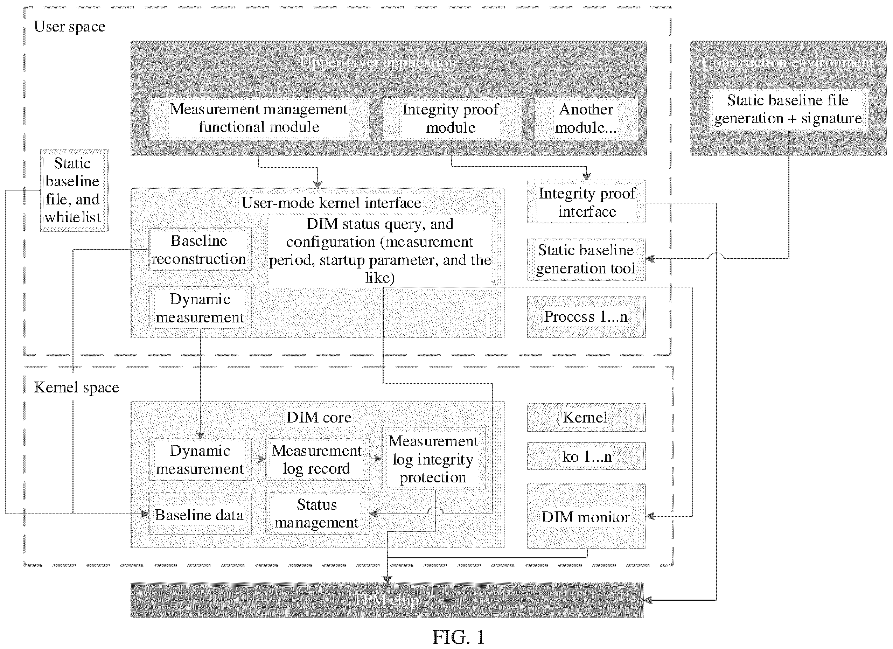

For example, FIG. 1 is a schematic diagram of a system architecture of a dynamic code segment measurement solution. As shown in FIG. 1, the software architecture may be but is not limited to a software architecture based on a Linux system. The software architecture may include a software layer and a hardware layer.

The software layer may include user space (user space) and kernel space (kernel space).

The user space may include an upper-layer application, a user-mode kernel interface, a static baseline generation tool, an integrity proof interface, and the like. For example, the upper-layer application may interact with a DIM core module, a DIM monitor module, and the like in the kernel space through the interface in the user space, and interact with hardware at the hardware layer. For example, in a service process construction phase, the static baseline generation tool may construct a measurement whitelist that needs to be sorted out and written by an administrator, that is, specify a process (including a user-mode process, a kernel module, and a kernel) on which code segment measurement needs to be performed, extract a code segment from a constructed process file, calculate a digest value, and output static baseline data. Both the whitelist data and the static baseline data include key data required for performing a measurement function. To ensure that the key data is not tampered with, both the whitelist data and the static baseline data need to be signed.

The kernel space may include a dynamic integrity measurement (dynamic integrity measurement, DIM) core (core) module (DIM core module), and a DIM monitor module (DIM monitor module). For example, the DIM core module may execute core dynamic measurement logic, including whitelist parsing, static baseline parsing, dynamic baseline establishment, measurement execution, measurement log recording, TPM chip extension operation, and the like. The DIM monitor module may monitor baseline data generated by the DIM core module to protect integrity of dynamic baseline data. The DIM core module and DIM monitor module can provide a user-mode interface for an upper-layer service to trigger related functions and for a kernel timer to configure timed tasks.

The hardware layer may include a chip, for example, a TPM chip or a TCM chip.

Refer to FIG. 1. First, the static baseline generation tool constructs a static baseline file and a whitelist. Then, a measurement management functional module in the upper-layer application may trigger baseline reconstruction. In this case, the DIM core module may construct baseline data. In addition, dynamic measurement may be triggered by using the measurement management functional module in the upper-layer application. In this case, the DIM core may perform dynamic measurement, generate a measurement log record, and the like, and interact with the TPM chip to perform measurement log integrity protection. The measurement management functional module in the upper-layer application may also be used to query a DIM status, configure a measurement period and startup parameters, and the like. In addition, an integrity proof module in the upper-layer application may further trigger interaction with the hardware layer, to implement integrity protection for a measurement result based on a platform configuration register (platform configuration register, PCR) of the TPM chip, and implement integrity protection for baseline data in the memory by using a seal/unseal mechanism of the TPM chip.

The following describes, based on the system architecture shown in FIG. 1, a dynamic code segment measurement solution provided in embodiments of this application.

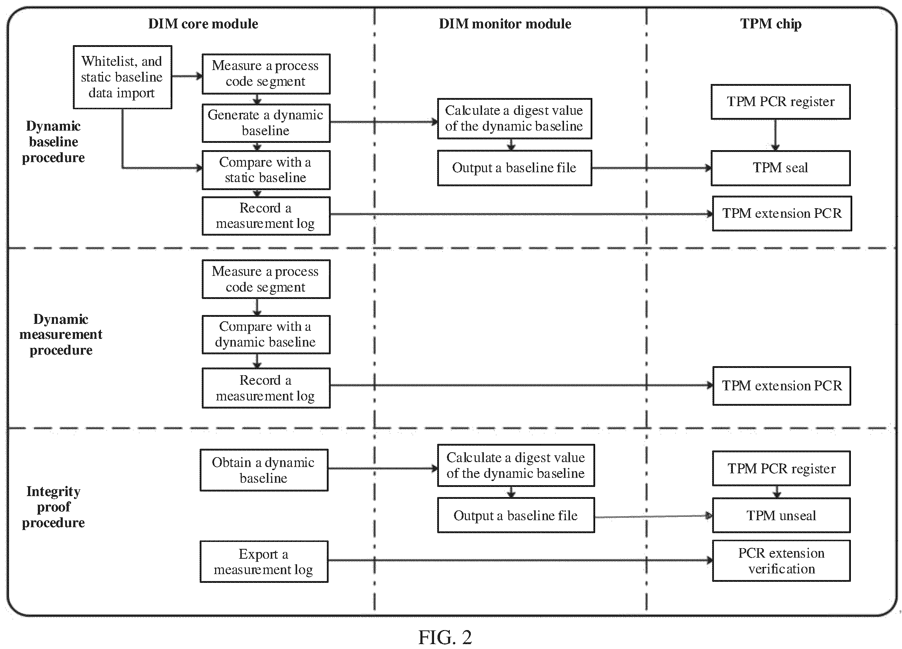

For example, FIG. 2 shows a main procedure of a dynamic code segment measurement solution. As shown in FIG. 2, the dynamic code segment measurement solution mainly includes a dynamic baseline procedure, a dynamic measurement procedure, and an integrity proof procedure. The following describes these procedures.

### (1) Dynamic baseline procedure

This procedure is the first step for executing a measurement function, and can be performed when the measurement function is enabled. In this procedure, the DIM core module can verify signatures of pre-constructed static baseline data and whitelist data, and import the whitelist data and the static baseline data. Then, the DIM core module may perform code segment measurement on each process that is specified in the whitelist data and that requires code segment measurement. A measurement result may be stored in a memory in a form of a dynamic baseline, to obtain dynamic baseline data. Then, the DIM core module may compare the dynamic baseline data with the static baseline data, and record a comparison result as a measurement log. Each process may be associated with one measurement log. Then, the DIM core module may perform hash calculation on each measurement log to obtain a digest value of each measurement log, and extend the digest value to the PCR register. For example, a process of extending the digest value of each measurement log to the PCR register may include: The DIM core module may transmit the digest value of the measurement log corresponding to each process to the TPM chip. Then, the TPM chip may separately perform extension calculation on each digest value obtained by the TPM chip, and update a calculation result to the PCR register.

In addition, after the DIM core module generates the dynamic baseline data, the DIM Monitor module may perform hash calculation on a memory area occupied by the dynamic baseline data to obtain a digest value of the memory area (namely, a process of calculating the digest value of the dynamic baseline in FIG. 2), and send the digest value of the memory area to the TPM chip (namely, a process of outputting the calculated digest value to the TPM chip in FIG. 2). For example, the digest value may be sent to the TPM chip in a form of a file. After obtaining the digest value of the memory area sent by the DIM core module, the TPM chip may use the digest value as reference data, and perform a seal operation by using the PCR register, to seal the key.

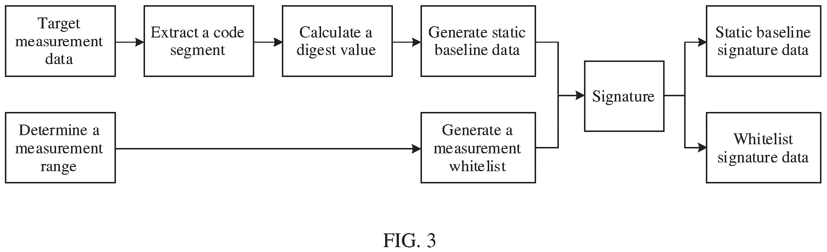

In some embodiments, before the procedure, a construction phase procedure may further be included. In this procedure, static baseline data and whitelist data are mainly constructed. As shown in FIG. 3, in a service process construction phase, measurement whitelist data that needs to be sorted and written by an administrator is constructed, that is, specify a process (including a user-mode process, a kernel module, and a kernel) on which code segment measurement needs to be performed, extract a code segment from constructed process data, calculate a digest value, and output static baseline data. Both the whitelist data and static baseline data include key data required for performing a measurement function. To ensure that the key data is not tampered with, both the whitelist data and the static baseline data need to be signed. By signing the whitelist data and static baseline data separately, signed whitelist data and signed static baseline data can be obtained. For example, the whitelist data may include a file path of a process on which code segment measurement needs to be performed. Therefore, the file path of the process indicates the process on which code segment measurement needs to be performed.

### (2) Dynamic measurement procedure

This procedure can be performed after the dynamic baseline procedure is performed. In this procedure, the DIM core module may perform code segment measurement on each process that is specified in the whitelist data and that requires code segment measurement, and compare a measurement result (which may also be referred to as measurement data) with dynamic baseline data (which may also be referred to as target baseline data) obtained in the foregoing dynamic baseline procedure. If the comparison is inconsistent, it indicates that the code segment and/or the target baseline data of each process may be tampered with. In this case, a result may be recorded as a measurement log. Each process may be associated with one measurement log. In addition, hash calculation is performed on each measurement log separately to obtain a digest value of each measurement log, and the digest value is extended to the PCR register. If the comparison is consistent, it indicates that the code segment of each process that requires code segment measurement and that is specified in the list data is not tampered with.

### (3) Integrity proof procedure

This procedure can be performed after the dynamic measurement procedure is completed. In the procedure, the DIM monitor module may perform hash calculation (namely, the process of calculating digest value of the dynamic baseline in FIG. 2) on a memory area occupied by the dynamic baseline data (namely, the target baseline data) obtained in the dynamic baseline procedure, to obtain a digest value of the memory area, and transmit the digest value of the memory area to the TPM chip (namely, the process of outputting the calculated digest value to the TPM chip in FIG. 2). Then, the TPM chip may perform an unseal operation by using the digest value of the memory area and the PCR register in the memory area, to unseal the key. If the unseal is successful, it indicates that the dynamic baseline data (namely, the target baseline data) in the memory is not tampered with; otherwise, it indicates that a tampering behavior occurs.

In addition, the TPM chip may further perform extension calculation on the digest value of each measurement log obtained in the foregoing dynamic measurement procedure, and compare a final extension calculation value with the PCR register, to detect integrity of the measurement log, so that tampering of the measurement result is avoided.

The foregoing is a related description of a main procedure of the dynamic code segment measurement solution provided in this embodiment of this application. In a dynamic measurement process, changed code data may appear in the user-mode process code segment and the kernel code segment. In this embodiment of this application, the data may be actively identified and skipped, thereby improving practicability and accuracy of the dynamic measurement technology. The following separately describes the user-mode process code segment and the kernel-mode code segment.

### 1. For the user-mode process code segment:

For a code segment of a user-mode process file (for example, an executable file or a dynamic link library), a relocation during loading scenario may exist. That is, relative address data in a code segment of a binary file needs to be replaced with an actual memory address after loading. In a scenario where address randomization is enabled, a final actual memory address cannot be determined during construction. Therefore, direct measurement may cause a measurement value of the memory code segment to be different from that of the binary file code segment. To support this measurement scenario, in this application, when the binary file is parsed to generate static baseline data and the code segment in the memory is measured, address data that may change in measurement is actively identified and skipped.

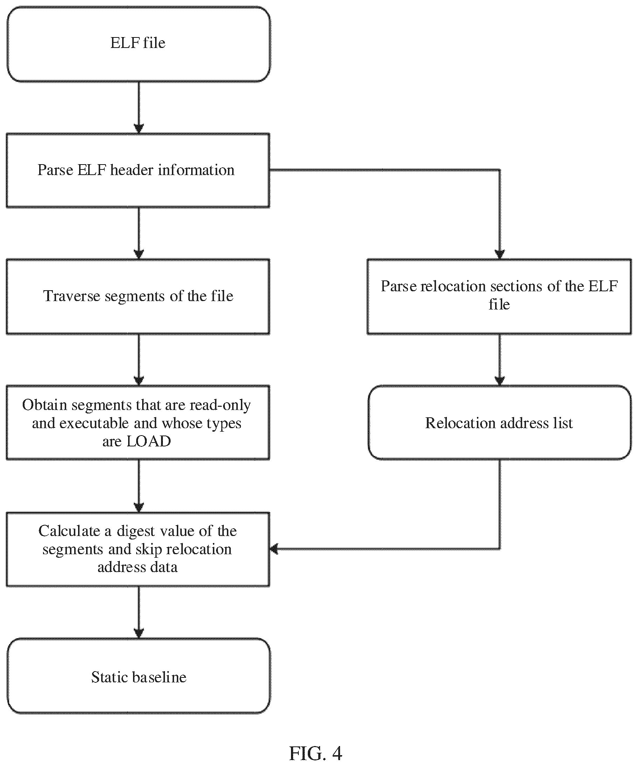

For example, FIG. 4 shows a procedure of generating static baseline data by using an ELF file. As shown in FIG. 4, a procedure of parsing an executable and linkable format (executable and linking format, ELF) file to generate static baseline data may include:
(1) Parse header information of the ELF file to obtain a segment and section information of the ELF file.
(2) Traverse the segments of the ELF file to obtain segments that are read-only and executable and whose type is LOAD, namely, code segment information.
(3) Traverse relocation sections (relocation sections) of the ELF file to obtain a relocation address list.
(4) Calculate a digest value of the segments content obtained in step (2), and skip the data corresponding to the relocation address obtained in step (3) in the calculation process. A calculation result is static baseline data of the ELF file.

In other words, when the static baseline data is obtained, an executable file corresponding to the user-mode process may be first obtained. Then, header information of the executable file may be obtained, and a segment that includes the code segment and that is in the executable file is obtained based on the header information. A target address list in which a relocation address occurs in the executable file is obtained based on the header information. Hash calculation is performed on the segment that includes the code segment and that is in the executable file. Data corresponding to the address in the target address list is removed in the calculation process, to obtain the static baseline data. For example, when there are a plurality of user-mode processes, the plurality of user-mode processes may correspond to one piece of static baseline data, and the static baseline data may be but is not limited to be obtained by using static baseline data corresponding to each of the plurality of user-mode processes.

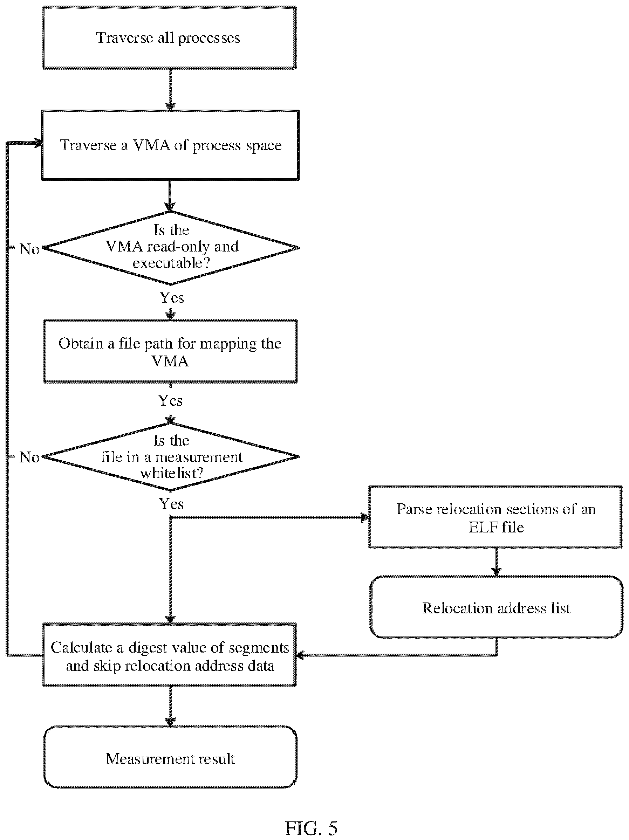

For example, FIG. 5 shows a procedure of measuring a user-mode process code segment. As shown in FIG. 5, a procedure of measuring a user-mode process code segment may include the following steps.
(1) Traverse virtual memory areas (virtual memory area, VMA) of memory space of all user-mode processes, and obtain a VMA that is read-only and executable and that is mapped to a file, namely, code segment information. When the user-mode process is running, the code segment information of the process may be mapped to the VMA. Therefore, the code segment information of the process may be obtained from the VMA.
(2) Check whether a file path for mapping the VMA is in the whitelist. If yes, perform subsequent measurement action. If no, continue to perform the traverse in step (1).
(3) Parse relocation sections (relocation sections) of an ELF file in the file path for mapping the VMA, to obtain a relocation address list.
(4) Calculate a digest value of VMA content obtained in step (2), and skip the data corresponding to the relocation address obtained in step (3) in the calculation process. A calculation result is the measurement result of the process code segment data.

In other words, during measurement, a target segment (namely, the foregoing segment) that includes a code segment and that is in a memory of each user-mode process may be obtained. A target address list in which a relocation address occurs in the target segment may be obtained. Finally, hash calculation is performed on the target segment, and data corresponding to an address in the target address list is removed in a calculation process, to obtain a measurement result (that is, obtain measurement data).

### 2. For a kernel code segment:

For a kernel code segment, data of some addresses may jump due to impact of the static keys mechanism. Therefore, in a process of measuring the kernel code segment, a jump table (jump table) needs to be parsed, and a code segment address that may change is skipped during calculation.

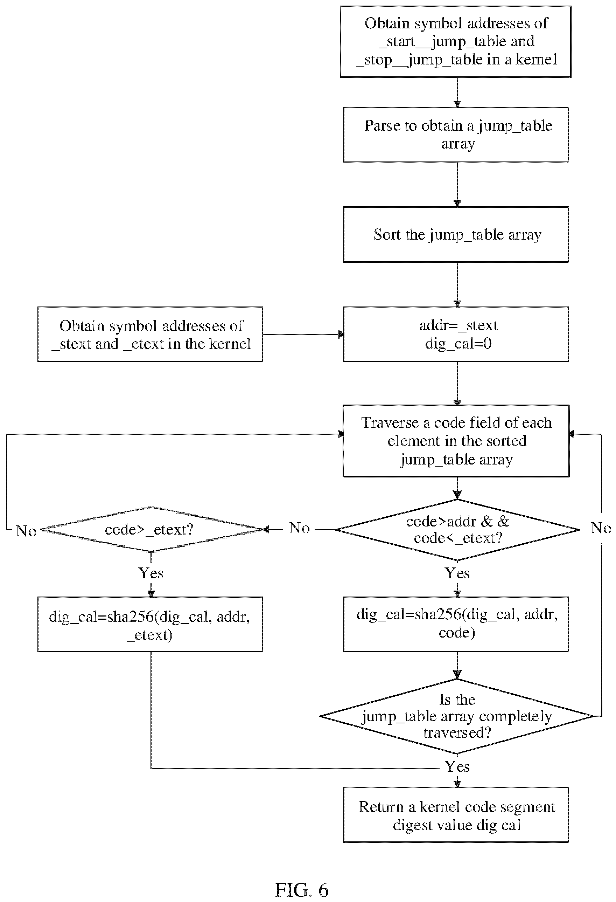

For example, FIG. 6 shows a procedure of measuring a kernel code segment. As shown in FIG. 6, a procedure of measuring a kernel code segment may include:
(1) Obtain a start and end address of kernel jump table data, and parse to obtain a jump table array. For example, the start and end address of the kernel jump table data may be determined by using a symbol address in the kernel.
(2) Obtain the start and end address of the kernel code segment data. For example, the start and end address of the kernel code segment data may be determined by using a symbol address in the kernel.
(3) Calculate a digest value of the kernel code segment data obtained in step (2), and skip, in a calculation process, data that may change during running and that is defined in the jump table array obtained in step (1). A calculation result is the measurement result of the kernel code segment.

For example, if the start and end address of the kernel code segment data are (1,2,3,4,5), and the address in the jump table array is (2,4,6,7), during calculation, a digest value of the kernel code segment data corresponding to the address (1,3,5) may be calculated, and the digest value is used as a measurement result.

In other words, during measurement, the start and end address of the code segment data in the kernel may be first obtained, and a second address of the changed code segment in the kernel may be obtained. Then, hash calculation is performed on the code segment data within a range of the start and end address, and data corresponding to the second address is removed in a calculation process, to obtain a measurement result (that is, obtain the measurement data).

The foregoing describes measurement of the user-mode process code segment and the kernel-mode code segment. It may be understood that the foregoing measurement process may be applied to the "measure a process code segment" shown in FIG. 2.

In some embodiments, in a dynamic measurement process, for common code segment measurement execution logic, VMA of each process is traversed, and measurement is performed on each process and dynamic library that are in the whitelist. In this process, however, some pieces of repeated measurement may be caused due to the following reasons: (a) Linux has a copy-on-write mechanism, and a physical memory corresponding to a virtual memory of a parent and child process may be the same. (b) For the dynamic library, there is only one instance in the system, and the instance is mapped to different process address space through virtual addresses.

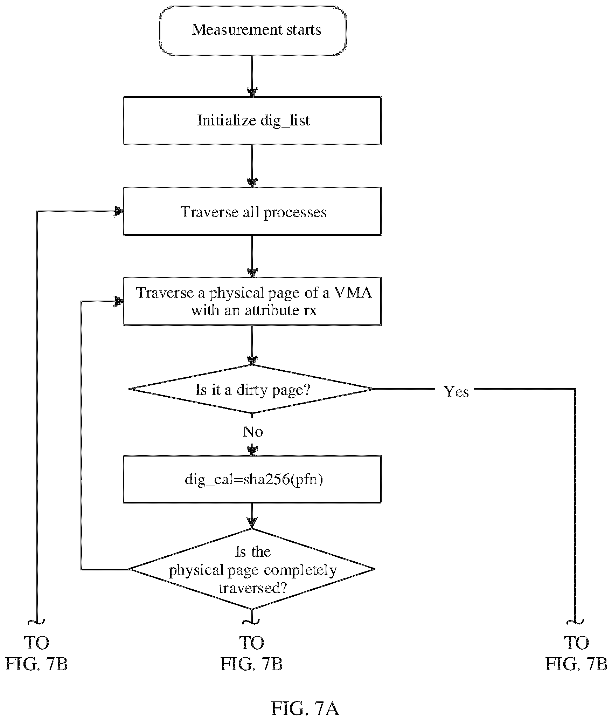

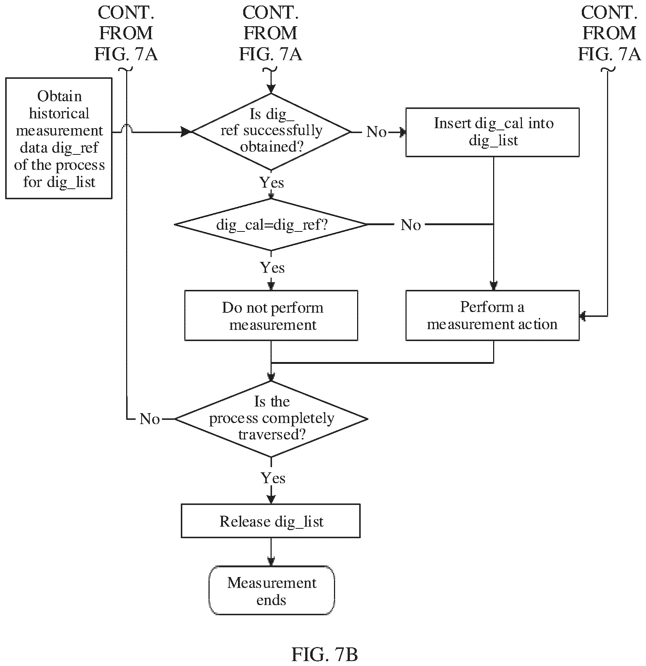

When a plurality of processes are measured, physical address intervals of actual measurement may be the same, which results in redundant measurement. For this problem, as shown in FIG. 7A and FIG. 7B, an embodiment of this application provides the following optimization method.
(1) Before each piece of measurement, initialize and maintain a data structure dig_list for storing data.
(2) When each process is measured, first obtain M target segments that are in a memory corresponding to the process and that include code segments. Then, for any one target segment of the M target segments, obtain x physical pages corresponding to the any one target segment. When there is a dirty page in the x physical pages, it is considered that a tampering behavior may occur. In this case, the any one target segment may be measured. When no dirty page exists in the x physical pages, perform hash calculation on page frame numbers of the x physical pages, to obtain a first hash value dig_cal. After the first hash value dig_cal is obtained, historical measurement data dig_ref corresponding to the target process that currently needs to be measured may be obtained from dig_list. If the obtaining fails, it indicates that the target process is measured for the first time in the current measurement process. The dig_cal associated with the target process is inserted into the dig_list, and the measurement action is normally performed. If the obtaining is successful, whether the dig_cal associated with the target process is equal to the obtained dig_ref is compared. If the dig_cal is equal to the obtained dig_ref, it indicates that measurement has been performed on the physical address corresponding to the target process, and measurement does not need to be performed again. Otherwise, the measurement action is normally performed.
(3) After target segments of a process are traversed, a next process may be measured.
(4) After the measurement is complete (that is, after all processes are traversed), destruct the dig_list.

In some embodiments, in a dynamic measurement process, a measurement result of a process code segment is compared with dynamic baseline data in a memory, to detect whether a code segment tampering attack occurs. However, if an attacker tampers with the code segment and modifies the dynamic baseline data in the memory, the attack may fail to be detected by the DIM.

For this attack scenario, in this embodiment of this application, a DIM monitor module is introduced to perform hash calculation on a memory area of dynamic baseline data stored in a kernel, to obtain a digest value of the memory area. The digest value is output to a dynamic baseline digest file, and then baseline and measurement integrity is performed by using a seal/unseal mechanism of a TPM chip. This avoids the foregoing situation.

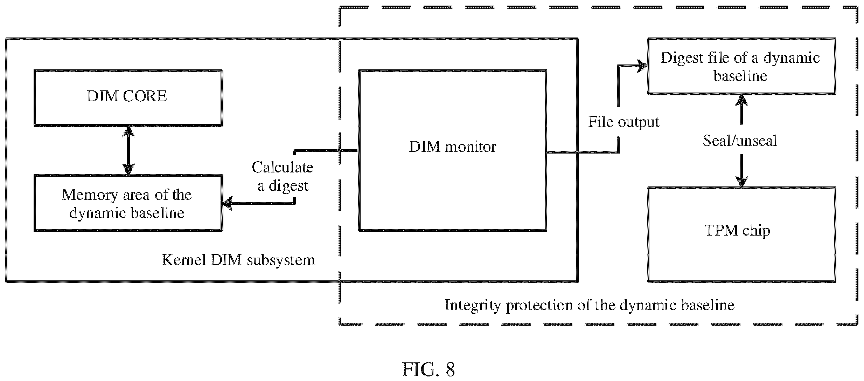

Specifically, as shown in FIG. 8, the integrity proof procedure is: in a dynamic baseline procedure, first, an upper-layer application process triggers a DIM core module to establish a dynamic baseline, and after the establishment is completed, dynamic baseline data of a measured process is retained in a specified memory area. Then, the upper-layer application process triggers the DIM monitor module to perform measurement, and the DIM monitor module performs hash calculation on the memory area where the dynamic baseline data is located to obtain a digest value of the memory area, and outputs the digest value to a dynamic baseline digest file. Finally, the seal mechanism of the TPM chip is used to generate, encrypt, and seal the key.

In the dynamic measurement process, the upper-layer application process first triggers dynamic measurement of the DIM core module and queries measurement logs to obtain a measurement result. Then, the upper-layer application process triggers the DIM monitor module to perform measurement, and the DIM monitor module performs hash calculation on the memory area where the dynamic baseline data is located to obtain a digest value of the memory area, and outputs the digest value to a dynamic baseline digest file. Finally, the upper-layer application triggers integrity proof and uses the unseal mechanism of the TPM chip. The key can be normally unsealed only when the dynamic baseline digest file obtained in this case is consistent with the dynamic baseline digest file in the seal step. This proves integrity of the dynamic baseline data.

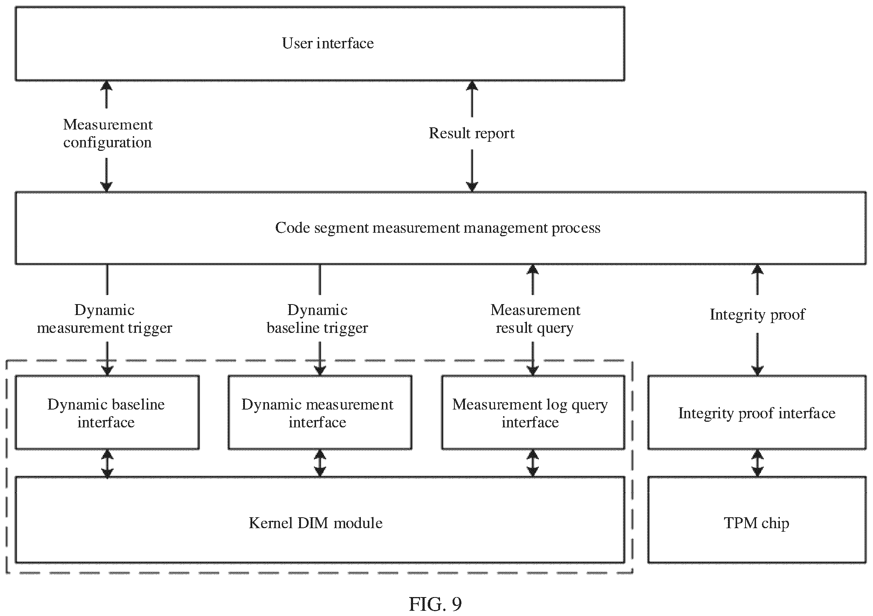

The foregoing describes the dynamic code segment measurement solution provided in this embodiment of this application. In this solution, in a software construction phase, static baseline data can be generated for files that need to be measured, and the files and the data are packed into a software package. In a software package installation process, the static baseline data may be placed in a specified location when a process file is installed. In a software package uninstallation/update process, the static baseline data may be controlled to be uninstalled/updated synchronously with the process file. In addition, as shown in FIG. 9, in a running phase, a code segment measurement management process may be run, and the code segment measurement management process interacts with a DIM subsystem and a TPM chip downwards and performs a code segment integrity measurement action, including dynamic baseline triggering, dynamic measurement triggering, measurement result query, integrity proof, and the like; and a user interface is interacted upwards, including reading a measurement parameter configured by a user, and reporting a measurement result for display.

The following describes, based on the foregoing described dynamic code segment measurement solution, a dynamic code segment measurement method provided in an embodiment of this application. It may be understood that the method is provided based on the foregoing described dynamic code segment measurement solution. For some or all content of the method, refer to the foregoing description of the dynamic code segment measurement solution.

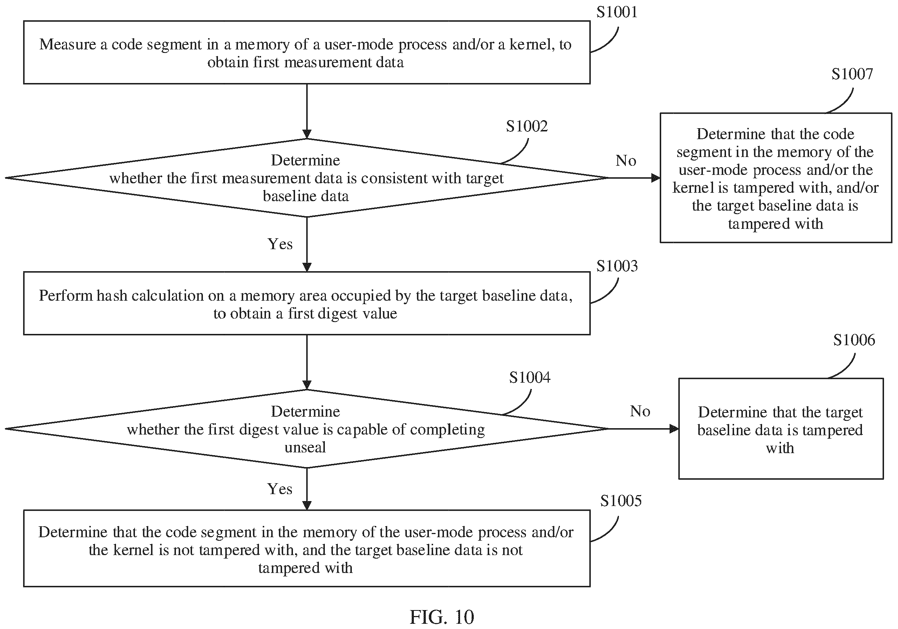

FIG. 10 is a schematic diagram of steps of a dynamic code segment measurement method according to an embodiment of this application. It may be understood that the method may be performed by any apparatus, device, platform, or device cluster that has computing and processing capabilities. For example, the method may, but is not limited to, be performed by a server. As shown in FIG. 10, the dynamic code segment measurement method may include the following steps.

S1001: Measure a code segment in a memory of a user-mode process and/or a kernel, to obtain first measurement data.

For example, the code segment in the memory of the user-mode process may be measured by using the measurement procedure described in FIG. 5, and the code segment in the kernel may be measured by using the measurement procedure described in FIG. 6. For example, the step may be a step in the dynamic measurement procedure in FIG. 2.

For example, when the code segment in the memory of the user-mode process is measured, for each user-mode process, M target segments that are in the memory corresponding to the process and that include code segments may be obtained. Then, for any one target segment of the M target segments, x physical pages corresponding to the any one target segment may be determined. When there is a dirty page in the x physical pages, the any one target segment is measured. When no dirty page exists in the x physical pages, hash calculation is performed on page frame numbers of the x physical pages to obtain a first hash value. Whether data that is the same as the first hash value exists in a first data structure is determined, where the first data structure is at least used to store a hash value of a page frame number of a target physical page. The target physical page is a physical page corresponding to a measured target segment, and the first data structure is created when measurement on the code segment in the memory of the user-mode process starts, and is destructed when measurement on the code segment in the memory of the user-mode process ends. If the data exists, the any one target segment is not measured. If the data does not exist, the first hash value is added to the first data structure, and the any one target segment is measured. That is, during measurement, for each user-mode process, a target segment in a memory of the user-mode process may be first obtained, and then for each obtained target segment, a physical page corresponding to the target segment is determined. When a dirty page exists in the physical page corresponding to the target segment, the target segment is measured. Otherwise, a hash value of a page frame number of the physical page corresponding to the target segment is calculated, and whether the hash value exists in the first data structure is determined. If the hash value does not exist, the target segment is measured, and the hash value obtained through calculation is recorded in the first data structure. If the hash value exists, the target segment is not measured. In this way, when memory measurement is performed on a plurality of user-mode processes, repeated measurement determining is first performed based on a physical page address, to avoid redundant measurement, so that time consumed by dynamic measurement can be greatly reduced. For example, this process may be a part or all of the procedure described in FIG. 7A and FIG. 7B. In some embodiments, the measurement on the code segment in the memory of the user-mode process may include measurement on one target segment that is in the memory of the user-mode process and that includes the code segment, or measurement on a plurality of target segments that are in the memory of the user-mode process and that include the code segment, which may be specifically determined according to a case.

S 1002: Determine whether the first measurement data is consistent with target baseline data. When the two are consistent, S 1003 may be performed. Otherwise, S1007 is performed. For example, the target baseline data may be dynamic baseline data generated by performing measurement in the dynamic baseline procedure in FIG. 2.

S 1003: Perform hash calculation on a memory area occupied by the target baseline data, to obtain a first digest value.

S1004: Determine whether the first digest value is capable of completing unseal. After the first digest value is obtained, an unseal (unseal) operation may be performed by using the first digest value. When the unseal can be completed, S1005 is performed. Otherwise, S1006 is performed.

S1005: Determine that the code segment in the memory of the user-mode process and/or the kernel is not tampered with, and the target baseline data is not tampered with.

S1006: Determine that the target baseline data is tampered with. For example, S1003 to S1005 may be understood as, but not limited to, a part or all of the procedure described in FIG. 8. For example, because the first digest value is not capable of completing unseal, it may be determined that the target baseline data has been tampered with. In some embodiments, when it is previously determined that the code segment in the memory of the user-mode process and/or the kernel is not tampered with, but it is later determined that the target baseline data is tampered with, it may be determined that a previous determining result is invalid, and in this case, it may be directly determined that the target baseline data is tampered with. S1007: Determine that the code segment in the memory of the user-mode process and/or the kernel is tampered with, and/or the target baseline data is tampered with. For example, when the first measurement data is inconsistent with the target baseline data, it may continue to be determined whether the first digest value is capable of completing unseal. When the first measurement data is inconsistent with the target baseline data, and the first digest value is capable of completing unseal, it may be determined that the code segment in the memory of the user-mode process and/or the kernel is tampered with, and the target baseline data is not tampered with. When the first measurement data is inconsistent with the target baseline data, and the first digest value is not capable of completing unseal, it is determined that the target baseline data is tampered with.

In this way, when dynamic measurement is performed on the code segment in the memory of the user-mode process and/or the kernel, the measurement data is compared with the target baseline data. When the two are consistent, the digest value of the memory area occupied by the target baseline data is calculated, and protection is performed by using a seal/unseal mechanism. This ensures integrity and accuracy of baseline data during dynamic measurement.

In some embodiments, when the first measurement data is inconsistent with the target baseline data, a first measurement log may be further generated. Then, hash calculation is performed on the first measurement log to obtain a digest value of the first measurement log. Finally, a reference extension value is updated based on the reference extension value and the digest value of the first measurement log. For example, this process may be understood as a part or all of a process of extending the measurement log to the TPM chip in the dynamic measurement procedure described in FIG. 2. For example, the reference extension value may be a value obtained after the measurement log generated previously is extended to the TPM chip.

In some embodiments, after an instruction for indicating to perform integrity check on the first measurement log is obtained, a hash value may be calculated for the first measurement log one by one, and extension calculation is performed on the obtained hash value, to obtain a second extension value. Then, it is determined whether the second extension value is consistent with the reference extension value. If the second extension value is inconsistent with the reference extension value, it is determined that the first measurement log is tampered with. If the second extension value is consistent with the reference extension value, it is determined that the first measurement log is not tampered with.

In some embodiments, before whether the first measurement data is consistent with the target baseline data is determined, that is, before S1002, the code segment in the memory of the user-mode process may be further measured to obtain the target baseline data, hash calculation is performed on the memory area occupied by the target baseline data to obtain a second digest value, and a seal operation is performed based on the second digest value, to complete the seal operation. For example, a process of obtaining the target baseline data may be a process of generating dynamic baseline data in the dynamic baseline procedure described in FIG. 2, and the target baseline data may also be dynamic baseline data generated in the dynamic baseline procedure described in FIG. 2.

In addition, in this process, static baseline data of the user-mode process may be further obtained. Then, the static baseline data is compared with the calculated target baseline data. When the target baseline data is inconsistent with the static baseline data, it may be determined that the code segment in the memory of the user-mode process is tampered with, and a second measurement log is generated. For example, the static baseline data may be the static baseline data described in the dynamic baseline procedure in FIG. 2. For example, a process of obtaining the static baseline data may be obtained in the measurement process described in FIG. 4. For example, after it is determined that the code segment in the memory of the user-mode process is tampered with, it may be further determined whether the digest value corresponding to the target baseline data is capable of completing unseal. When the digest value is capable of competing unseal, it may be determined that the measurement is valid. In this case, it may be determined that the code segment is tampered with and the target baseline data is not tampered with.

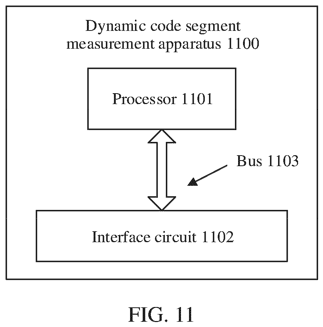

Based on the method described in the foregoing embodiment, an embodiment of this application further provides a dynamic code segment measurement apparatus. FIG. 11 is a schematic diagram of a structure of a dynamic code segment measurement apparatus according to an embodiment of this application. As shown in FIG. 11, the dynamic code segment measurement apparatus 1100 includes one or more processors 1101 and an interface circuit 1102. Optionally, the dynamic code segment measurement apparatus 1100 may further include a bus 1103.

The processor 1101 may be an integrated circuit chip and has a signal processing capability. In an implementation process, steps in the foregoing methods may be implemented by using a hardware integrated logic circuit in the processor 1101, or by using instructions in a form of software. The processor 1101 may be a general purpose processor, a neural network processor (Neural Network Processing Unit, NPU), a digital signal processor (DSP), an application-specific integrated circuit (ASIC), a field programmable gate array (FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor, or the like.

The interface circuit 1102 may be used to send or receive data, instructions, or information. The processor 1101 may process the data, the instructions, or other information received through the interface circuit 1102, and may send processed information through the interface circuit 1102.

Optionally, the dynamic code segment measurement apparatus 1100 further includes a storage. The storage may include a read-only memory and a random access memory, and provide operation instructions and data for the processor. A part of the storage may further include a nonvolatile random access memory (NVRAM). The storage may be coupled to the processor 1101.

Optionally, the storage stores an executable software module or a data structure, and the processor 1101 may perform a corresponding operation by invoking operation instructions (the operation instructions may be stored in an operating system) stored in the storage.

Optionally, the interface circuit 1102 may be configured to output an execution result of the processor 1101.

It should be noted that functions corresponding to each of the processor 1101 and the interface circuit 1102 may be implemented by using a hardware design, may be implemented by using a software design, or may be implemented by using a combination of software and hardware. This is not limited herein.

It should be understood that steps in the foregoing method embodiments may be completed by using a logic circuit in a form of hardware or instructions in a form of software in the processor.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

1. A dynamic code segment measurement method, wherein the method comprises:
measuring a code segment in a memory of a user-mode process and/or a kernel, to obtain first measurement data;
determining whether the first measurement data is consistent with target baseline data;
when the first measurement data is consistent with the target baseline data, performing hash calculation on a memory area occupied by the target baseline data, to obtain a first digest value;
determining whether the first digest value is capable of completing unseal; and
if the first digest value is capable of completing unseal, determining that the code segment in the memory of the user-mode process and/or the kernel is not tampered with, and that the target baseline data is not tampered with; or
if the first digest value is not capable of completing unseal, determining that the target baseline data is tampered with.

2. The method according to claim 1, wherein the method further comprises:
when the first measurement data is inconsistent with the target baseline data, and the first digest value is capable of completing unseal, determining that the code segment in the memory of the user-mode process and/or the kernel is tampered with, and that the target baseline data is not tampered with; or
when the first measurement data is inconsistent with the target baseline data, and the first digest value is not capable of completing unseal, determining that the target baseline data is tampered with.

3. The method according to claim 1 or 2, wherein the method further comprises:
when the first measurement data is inconsistent with the target baseline data, generating a first measurement log;
performing hash calculation on the first measurement log, to obtain a digest value of the first measurement log; and
updating a reference extension value based on the reference extension value and the digest value of the first measurement log.

4. The method according to claim 3, wherein the method further comprises:
responding to an obtained first instruction, wherein the first instruction indicates to perform integrity check on the first measurement log;
calculating a hash value for the first measurement log one by one, and performing extension calculation on the obtained hash value, to obtain a second extension value;
determining whether the second extension value is consistent with the reference extension value; and
if the second extension value is inconsistent with the reference extension value, determining that the first measurement log is tampered with; or
if the second extension value is consistent with the reference extension value, determining that the first measurement log is not tampered with.

5. The method according to any one of claims 1 to 4, wherein before the determining whether the first measurement data is consistent with target baseline data, the method further comprises:
measuring the code segment in the memory of the user-mode process and/or the kernel, to obtain the target baseline data;
performing hash calculation on the memory area occupied by the target baseline data, to obtain a second digest value; and
performing a seal operation based on the second digest value.

6. The method according to claim 5, further comprising:
obtaining static baseline data of the user-mode process; and
when the target baseline data is inconsistent with the static baseline data, determining that the code segment in the memory of the user-mode process is tampered with, and generating a second measurement log.

7. The method according to claim 6, wherein the obtaining static baseline data of the user-mode process specifically comprises:
obtaining an executable file corresponding to the user-mode process;
obtaining header information of the executable file, and obtaining, based on the header information, a segment that comprises a code segment and that is in the executable file;
obtaining, based on the header information and in the executable file, a target address list in which a relocation address occurs; and
performing hash calculation on the target segment that comprises the code segment and that is in the executable file, and removing, in a calculation process, data corresponding to the relocation address in the target address list, to obtain the static baseline data.

8. The method according to any one of claims 1 to 7, wherein the measuring a code segment in a memory of a user-mode process specifically comprises:
obtaining a target segment that comprises the code segment and that is in the memory of the user-mode process;
obtaining, in the target segment, a target address list in which a relocation address occurs; and
performing hash calculation on the target segment, and removing, in a calculation process, data corresponding to the address in the target address list, to obtain a measurement result.

9. The method according to any one of claims 1 to 8, wherein the measuring a code segment in a kernel specifically comprises:
obtaining a first start and end address of code segment data in the kernel, and obtaining a second address of a changed code segment in the kernel; and
performing hash calculation on code segment data within a range of the first start and end address, and removing, in a calculation process, data corresponding to the second address, to obtain a measurement result.

10. The method according to any one of claims 1 to 9, wherein the measuring a code segment in a memory of a user-mode process specifically comprises:
obtaining M target segments that comprise code segments and that are in the memory of the user-mode process;
determining, for any one target segment of the M target segments, x physical pages corresponding to the any one target segment;
when there is a dirty page in the x physical pages, measuring the any one target segment; or
when no dirty page exists in the x physical pages, performing hash calculation on page frame numbers of the x physical pages, to obtain a first hash value;
determining whether data that is the same as the first hash value exists in a first data structure, wherein the first data structure is at least used to store a hash value of a page frame number of a target physical page, the target physical page is a physical page corresponding to a measured target segment, and the first data structure is created when measurement on the code segment in the memory of the user-mode process starts, and is destructed when measurement on the code segment in the memory of the user-mode process ends; and
if the data exists, skipping measuring the any one target segment; or
if the data does not exist, adding the first hash value to the first data structure, and measuring the any one target segment.

11. A dynamic code segment measurement apparatus, comprising:
at least one storage, configured to store a program; and
at least one processor, configured to execute the program stored in the storage, and when the program stored in the storage is executed, the processor is configured to perform the method according to any one of claims 1 to 10.

12. An electronic device, comprising:
at least one storage, configured to store a program; and
at least one processor, configured to execute the program stored in the storage, and when the program stored in the storage is executed, the processor is configured to perform the method according to any one of claims 1 to 10.

13. A computer-readable storage medium, wherein the computer-readable storage medium stores a computer program, and when the computer program is run on an electronic device, the electronic device is enabled to perform the method according to any one of claims 1 to 10.

14. A computer program product, wherein when the computer program product runs on an electronic device, the electronic device is enabled to perform the method according to any one of claims 1 to 10.
